# EUROPEAN PATENT APPLICATION

(11) **EP 4 622 142 A1**
(43) Date of publication of application: **24.09.2025**
(21) Application number: 25155906.8
(22) Date of filing: 05.02.2025
(51) Int. Cl.: H04B 17/309, H04B 17/391, G01S 19/24, G01S 7/00, G01S 13/00

(54) **SYSTEM AND METHOD FOR TESTING A JOINT COMMUNICATION AND SENSING CAPABLE DEVICE**

(30) Priority: 22.03.2024 US 202418613625
(71) Applicant: Rohde & Schwarz GmbH & Co. KG, 81671 München (DE)
(72) Inventor: Pabst, Alexander, 82024 Taufkirchen (DE)
(74) Representative: Rupp, Christian

(57) **Abstract**

The present disclosure relates to a system (10) for testing a joint communication and sensing, JCAS, capable device (20). The system (10) comprises: a mobile network component emulator (11), MNCE, which is configured to emulate at least one JCAS network component; wherein the MNCE (11) is configured to generate at least one RF signal with defined signal characteristics and to transmit said RF signal to the JCAS capable device (20); and a processor (12) which is configured to analyze a detection of at least one of the following parameters by the JCAS capable device (20) based on the at least one RF signal: a channel impulse response, a signal runtime, a signal level, a signal direction of arrival, a Doppler shift, and a Micro-Doppler shift.

## Description

### Technical Field

The present disclosure relates to wireless communication testing. More specifically, the present disclosure relates to a system and a method for testing joint communication and sensing (JCAS) capable devices.

### Background Art

The concept of joint communication and sensing (JCAS), also referred to as integrated communication and sensing (ICAS), represents a fusion of sensor and communication data. JCAS/ICAS will be a core capability introduced by 6G.

In JCAS systems, the same set of hardware and spectrum resources can be used for both sending and receiving data (communication) and detecting objects or changes in the environment (sensing). This will improve existing applications, e.g. in the automotive industry, and create new use cases in data communication and environmental detection. For instance, JCAS allows to detect, track and identify objects, events or the environment, and to create corresponding images to improve communication performance. Furthermore, an overall efficiency is significantly increased as communication and sensors can use the same spectrum and the signals can be sent and received from the same hardware resources.

The development of JCAS capable devices requires a continuous testing of new devices, e.g. during product design or production of the devices.

### Summary

Thus, there is a need to provide an improved system and an improved method for testing a JCAS capable device.

This is achieved by the embodiments provided in the enclosed independent claims. Advantageous implementations of the present disclosure are further defined in the dependent claims.

According to a first aspect, the present disclosure relates to a system for testing a joint communication and sensing (JCAS) capable device. The system comprises: a mobile network component emulator (MNCE) which is configured to emulate at least one JCAS network component; wherein the MNCE is configured to generate at least one RF signal with defined signal characteristics and to transmit said RF signal to the JCAS capable device; and a processor which is configured to analyze a detection of at least one of the following parameters by the JCAS capable device based on the at least one RF signal: a channel impulse response (CIR), a signal runtime, a signal level, a signal direction of arrival, (DOA), a Doppler shift, and a Micro-Doppler shift.

This achieves the advantage that a system is provided which allows testing the JCAS capabilities of device, such as JCAS capable user equipment (UE) for 6G networks.

Hereby, joint communication and sensing (JCAS) is considered to be essentially identical to integrated communication and sensing (ICAS). Thus, the system is also capable of testing an ICAS capable device, with the MNCE being configured to emulate at least one ICAS component.

The JCAS capable device (in the following also referred to as: JCAS device or device-under-test, DUT) can be a communication device which is adapted for a communication according to a 6G communication standard. For instance, the JCAS capable device can be a base station or a user equipment.

The parameters can be detected by the JCAS capable device based on measurements of the at least one RF signal, which is received by the JCAS device. At least some of these parameters can be signal parameters of the at least one RF signal (e.g., the signal level, DOA, etc.). Besides these parameters, the processor can further analyze other performance metrics of the JCAS capable device, e.g. the selection of the correct RF signal for performing its measurements, a measurement accuracy of the JCAS capable device, and/or demining/synchronization capabilities of the JCAS capable device.

The MNCE can be configured to exchange RF signals with the JCAS capable device, i.e., to receive signals from and transmit signals to the JCAS device. For instance, an RF signal can be generated and transmitted by the MNCE in response to a previously receive RF signal from the JCAS device, or vice versa (e.g., when simulating a radar reflection).

The processor can be a component of the MNCE. The processor can also be an external component, e.g. a processor of an external computing device. The processor can be communicatively connected to the JCAS capable device to receive feedback from the JCAS device on the detected parameters. For instance, this feedback mechanism allows the processor to verify an accurate detection of the parameters by the JCAS device. The processor can have knowledge of the at least one RF signal generated and transmitted by the MNCE.

The RF signal can be a wireless communication signal and/or a radar signal. The RF signal can be a signal in the radio frequency range from 3 kHz to 300 GHz. For instance, the RF signal can be a signal in a FR1 or FR2 frequency band. The RF signal can be transmitted over-the-air (OTA) to the JCAS capable device.

The defined signal characteristics of the RF signal can comprise the signal parameters which can be detected by the JCAS capable device. The MNCE can generate the RF signal with the defined signal characteristics according to the emulated network component, i.e., the signal can be adapted depending on the network component which is emulated.

In an embodiment, the emulated JCAS network component comprises an emulated base station

In an embodiment, the emulated JCAS network component comprises an emulated user equipment.

Thus, the system can simulate a communication from: base station to base station, base station to user equipment, user equipment to base station, and user equipment to user equipment.

In an embodiment, the processor is configured to determine an accuracy of the detection of the at least one parameter by the JCAS capable device. This achieves the advantage that the JCAS capabilities and performance of the DUT can be assessed during testing.

For instance, the processor is configured to verify a correct detection and/or reporting of the at least one parameter by the JCAS capable device.

For example, the MNCE can generate the RF signal, which is transmitted towards the JCAS device, with certain characteristics that emulate (or mimic) a certain real-world scenario or scene (e.g., an incoming signal from a certain direction, with a certain signal strength, Doppler shift, fading etc. according to the scenario). The processor can evaluate if and how accurately the JCAS device detects the parameters of the scenario or scene based on the signal.

In an embodiment, the processor is configured to analyze a detection of two, more or all of the following parameters by the JCAS capable device: a CIR, a signal runtime, a signal level, a DOA, a Doppler shift, or a Micro-Doppler shift.

In an embodiment, the MNCE comprises a fading module configured to emulate a fading in the at least one RF signal. In this way, a base band fading can be emulated. The fading module can be an integrated fading module.

In an embodiment, MNCE is configured to further adapt the at least one RF signal to emulate a scattering and/or a reflection from an object. For instance, the signal can be adapted to emulate scattering / reflection from a dynamic (e.g., moving) object or from a plurality of objects.

For example, the MNCE can provide a combined base band fading and object emulation.

In an embodiment, the system further comprises: a radar signal and/or radar reflection generator which is configured to generate the at least one RF signal in the form of a radar signal.

For instance, the radar signal / reflection generator can generate the radar signal based on a previously received radar signal from the JCAS capable device. In this way, a radar response can be simulated. The radar signal and/or radar reflection generator can be a component of the MNCE.

In an embodiment, the MNCE comprises a 2D or 3D antenna array configured to transmit the RF signals to the JCAS device.

In an embodiment, the system further comprises an anechoic chamber designed for inserting the JCAS capable device.

In an embodiment, the system is configured to issue a sensing request message to the JCAS capable device prior to transmitting the at least one RF signal.

For instance, sensing request messages are used in 6G applications to improve energy efficiency, as certain sensing functions of JCAS devices are only activated after receiving such a request message. The system can emulate such sensing request messages to prompt the JCAS capable device to activate its sensing capabilities.

In an embodiment the sensing request message comprises information regarding a direction of radiation and/or a signal strength of the at least one RF signal.

According to a second aspect, the present disclosure relates to a method for testing a joint communication and sensing, JCAS, capable device. The method comprises: emulating at least one JCAS network component; generating at least one RF signal with defined signal characteristics according to the emulated JCAS network component; transmitting said RF signal to the JCAS capable device; and analyzing a detection of at least one of the following parameters by the JCAS capable device based on the at least one RF signal: a channel impulse response (CIR), a signal runtime, a signal level, a signal direction of arrival (DOA), a Doppler shift, and a Micro-Doppler shift.

The JCAS network component can be emulated with a mobile network component emulator (MNCE). The MNCE can generate the at least one RF signal according to the emulated JCAS network component and/or according to a specific communication and sensing scenario.

The above description with regard to the system according to the first aspects of the disclosure is correspondingly valid for the method according to the second aspect of the disclosure.

### Brief Description of the Drawings

The above-described aspects and implementation forms of the present disclosure will be explained in the following description of specific embodiments in relation to the enclosed drawings, in which:
Fig. 1 shows a schematic diagram of a system for testing a JCAS capable device according to an embodiment;
Fig. 2 shows a schematic diagram of a JCAS network according to an embodiment;
Fig. 3 shows a schematic diagram of a system for testing a JCAS capable device according to an embodiment;
Fig. 4 shows a schematic diagram of a system for testing a JCAS capable device according to an embodiment; and
Fig. 5 shows a flow diagram of a method for testing a JCAS capable device according to an embodiment.

### Detailed Descriptions of Embodiments

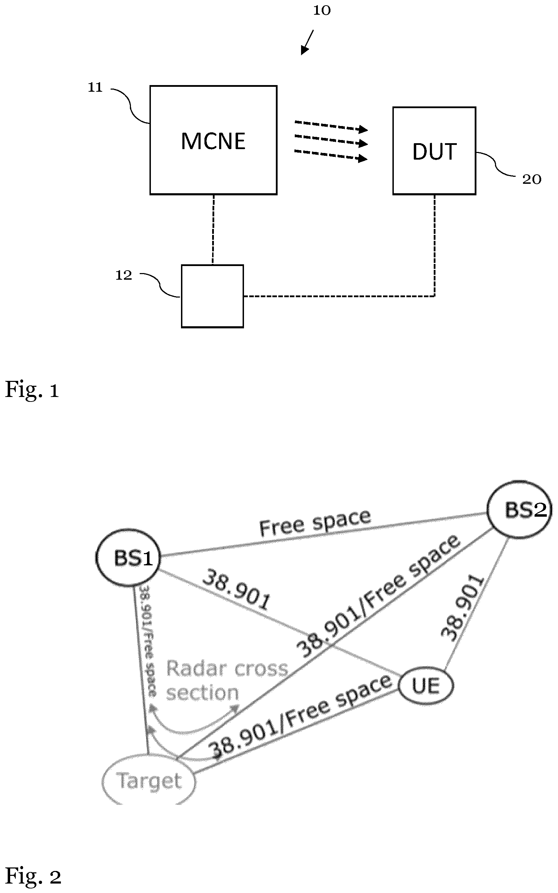

Fig. 1 shows a schematic diagram of a system 10 for testing a joint communication and sensing (JCAS) capable device 20 according to an embodiment.

The system 10 comprises: a mobile network component emulator (MNCE) 11 which is configured to emulate at least one JCAS network component; wherein the MNCE 11 is configured to generate at least one RF signal with defined signal characteristics and to transmit said RF signal to the JCAS capable device 20; and a processor 12 which is configured to analyze a detection of at least one of the following parameters by the JCAS capable device based on the at least one RF signal: a channel impulse response (CIR), a signal runtime, a signal level, a signal direction of arrival (DOA), a Doppler shift, and a Micro-Doppler shift.

The JCAS capable device 20 (or short: JCAS device or DUT) can be a communication device which can both send and receive data (communication) and detect objects or changes in the environment (sensing). For instance, the JCAS device 20 can be a communication device which is adapted for a communication according to a 6G communication standard.

For instance, the channel impulse response (CIR) characterizes how the signal is altered by a transmission medium or channel it passes through (e.g., in terms of runtime and signal level), the direction of arrival (DOA) can express the solid angle from which a signal arrives at the JCAS device, the Doppler shift can indicate a movement of an object (which transmits / reflects the signal), and the Micro-Doppler shift can indicate movements within the object (e.g., a heartbeat, or a rotation of wings or rotor blades).

The JCAS device 20 can measure these parameters to enable a detection and classification of objects in its environment. An object can thereby be characterized by its position, shape, size (e.g., radar cross-section) and movement (as detected via the Doppler or the Micro-Doppler shift). For instance, an object position can be detected via the signal level, signal runtime and DOA information.

The processor 12 of the system 10 can be configured to analyze a detection of two, more or all of these parameters (i.e., CIR, signal level, runtime, signal DOA, Doppler shift, and/or Micro-Doppler shift) by the JCAS capable device 20.

The processor 12 can be a component of the MNCE 11. The processor 12 can also be an external component, e.g. a processor of an external computing device. The processor 12 can be communicatively connected to the JCAS capable device to receive information on the detected parameters. The processor 12 may comprise an application-specific integrated circuit (ASICs), a field-programmable array (FPGAs), or a digital signal processor (DSP).

For example, the system 10 comprises a wireless or wire-bound communication interface which is connected to a respective interface of the JCAS device 20 (e.g., a USB interface) for receiving information on the detected parameters.

Furthermore, the processor 12 can be configured to determine an accuracy of the detection of one, more or all of the parameters by the JCAS capable device 20. Furthermore, the processor 12 can verify a correct detection and/or reporting of the parameter(s).

For example, the MNCE 11 can generate the RF signal with certain characteristics that emulate (or mimic) a certain real-world scenario or scene (e.g., an incoming signal from a certain direction, with a certain signal strength, Doppler shift, fading etc. according to the scenario). The processor 12 can then evaluate if and how accurately the JCAS device 20 detects the parameters of the scenario or scene based on the signal.

The at least one RF signal, which is illustrated by three arrows in Fig. 1, can be a wireless communication signal and/or a radar signal. The RF signal can be a signal in the radio frequency range from 3 kHz to 300 GHz. For instance, the RF signal can be a signal in a FR1 or FR2 frequency band. For instance, the FR2 signal is a sensing signal which is accurately calibrated for the testing of the JCAS device 11, while the FR1 signal can be transmitted under ideal conditions (e.g., uncalibrated).

The MNCE 11 can comprise a signal generator which is configured to generate the at least one RF signal according to the defined signal characteristics. These signal characteristics can comprise the signal parameters which are to be detected by the JCAS capable device 20. For instance, the MNCE 11 can comprise a processing unit which is configured to calculate the RF signal to be generated and/or a memory which is configured to store pre-defined signal characteristics of the RF signal to be generated.

The MNCE 11 can further comprise at least one antenna to transmit the at least one RF signal to the JCAS device 20, e.g. over-the-air (OTA).

For example, the MNCE 11 can be a radio communication tester, such as R&S^{®}CMX500 or a comparable device.

The JCAS capable device 20 can be a base station or a user equipment.

The MNCE 11 can be configured to emulate the JCAS network component as a JCAS capable base station or a JCAS capable user equipment.

Thus, the system 10 can simulate a communication from base station to base station, from user equipment to base station, from base station to user equipment, or from user equipment to user equipment.

Fig. 2 shows an exemplary JCAS network, which comprises two JCAS capable base stations (BS1, BS2) and one JCAS capable user equipment (UE) exchange communication signals, e.g., over free space. Furthermore, a target exists in the network environment generates signal reflections.

In the exemplary network shown in Fig. 2, both BS1 and BS2 can maintain an active link to the UE and to each other. The user equipment can receive propagated signals from BS1 and BS2 (active links) and scattered BS1 signals from the target.

For example, the following communication and sensing scenario is possible in this network:
1) BS1 and/or BS2 can send a sensing request message to UE. This message can prompt the UE to analyze the scattered signal. The sensing request message can comprise a frequency to search and/or a base station identifier of BS1. The sensing request message can further comprise an approximate range of target (i.e., a sector to search) and/or an approximate radar cross-section (e.g., to adjust the sensitivity).
2) The UE can then forward to BS1 and/or BS2: a detected CIR of the requested BS signal (scattered signal), as well as a detected Doppler shift and/or a detected DOA for CIR.
3) BS 1 can further send a sensing request to BS2. This can prompt BS2 to request sensing results from the UE in reach. BS2 can then report CIR and DOA measured at its own location together with the reports from UE to the BS 1.

In this example, a user equipment detects certain signal parameters in an RF signal from a BS which was reflected / scatted from an object in its environment, and communicates these parameters to a base station for further analysis. Thus, a resource intensive processing of the parameters (e.g., for object identification) can be carried out in the base station, a gNB or an edge network and the impact on this sensing on the user equipment performance and battery life can be minimized.

The parameters which are measured or detected by the user equipment can be limited to certain signal and/or target properties, such as signal delay, Doppler Shift, or signal attenuation, DOA, or CIR (e.g., delay, attenuation). For example, these measurements are not further processed by the user equipment, but instead reported to a base station or gNB to save processing resources and battery life of the user equipment.

Furthermore, also the base stations (e.g., a gNB) in Fig. 2 can conduct measurements according to their JCAS functionality. For instance, the base stations can comprise a massive MIMO array for receiving and/or transmitting communication and sensor signals. The base stations can detect the following signal and/or target properties based on a received RF signal: a signal delay, a Doppler-shift, a DOA, a CIR, a target cross-section (e.g., from multiple scattering points), and/or a potential Micro-Doppler shift (e.g., due to propeller, wheels, etc.). For instance, the base stations can detect multiple beams to deduct a target cross-section.

A JCAS capable base station can carry out measurements of the signal parameter(s) by themselves and/or can query other base stations and/or user equipment to increase the accuracy of these measurements and/or to avoid self-interference. This might require extensions in the protocol, e.g. to forward the sensing request message to user equipment and to process the response. For instance, a sensing request messages can be used in 6G applications to improve energy efficiency, as certain sensing functions of a JCAS device are only activated after receiving such a request message.

The system 10, as e.g. shown in Fig. 1, can emulate such communication scenarios. For instance, the MNCE 11 can emulate signals emitted by one or more base stations and/or user equipment to test the signal analysis and/or target detection capabilities of the DUT 20 (which itself can be a base station or a user equipment).

The system 10 can further emulate a sensing request message to prompt the JCAS capable device 20 to activate its sensing capabilities, e.g. if the JCAS device 20 is a user equipment with such a functionality. For instance, the system 10 can be configured to issue the sensing request message to the JCAS capable device 20 prior to transmitting the at least one RF signal.

The sensing request message issued by the system 10 can comprise information regarding a direction of radiation and/or a signal strength of the RF signal to be generated and transmitted by the MNCE 11.

In the following four exemplary test scenarios for testing a JCAS device 20 with the system 10 are discussed:

According to a first test scenario, the JCAS device 20 is a user equipment, and the RF signal generated and transmitted by the MNCE 11 is an uncalibrated signal in the FR1 frequency band. The JCAS can measure a CIR, DOA and Doppler shift in the signal, and report the measured parameters to the processor 12 for verification.

In a further test scenario, the JCAS device 20 is a user equipment, and the RF signal is a calibrated downlink signal in the FR2 frequency band which is transmitted over-the-air (OTA) to the JCAS device 20. The system 10 can verify and/or evaluate the measurements conducted by JCAS device 10 with the signal, e.g. in terms of the following parameters: a selection of the correct radar signal, a sensitivity of a CIR measurement, a Doppler shift measurement accuracy, a Doppler shift measurement range, a DOA accuracy, a timing accuracy.

In an alternative test scenario, the JCAS 20 device is a base station. For instance, the MNCE 11 is configured to operate as an AREG (automotive radar echo generator). Here, essentially the same measurement verifications can be carried out as with the UE as JCAS device 20. However, it can be expected that the base station JCAS device 20 performs measurements with a higher accuracy. Thus, a higher complexity of target simulation (simulated target cross-section, Micro-Doppler, etc.) can be carried out.

In yet another test scenario, the JCAS 20 device is a base station, and the RF signal is transmitted over-the-air (OTA). The system 10 can verify and/or evaluate the measurements conducted by JCAS device 10 with the signal, e.g. in terms of the following parameters: a selection of correct radar signal (e.g., on the basis of cell ID, beam ID) and, if necessary, suppression of interference (S/N or S/I) or multipath propagation if necessary; a measurement sensitivity (e.g., absolute and dynamically in presence of a main signal); an angular sensitivity (e.g., when sensing on different angles than the downlink signal); a Doppler shift measurement (e.g., in terms of accuracy and range which is limited by the bandwidth of the DUT); a DOA accuracy; a timing / synchronization; and/or a target cross-section accuracy (e.g., using calibrated targets).

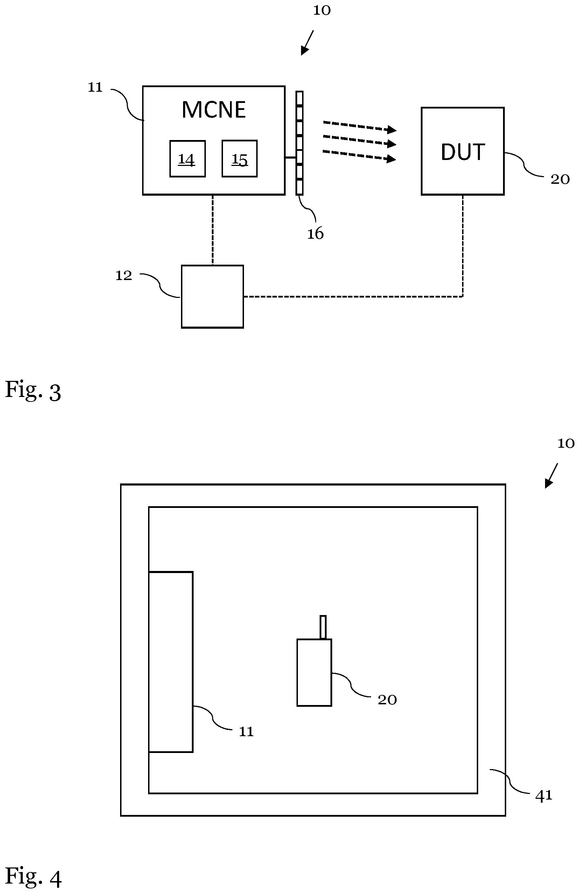

Figs 3 and 4 show exemplary embodiments of the system 10, which build on the test system 10 shown in Fig. 1. Same elements are labelled with the same reference signs. Hereinafter, only the differences between Fig. 1 and Figs. 3 and 4 are explained.

In the exemplary embodiment shown in Fig. 3, the MNCE 11 of the system 10 further comprises a 2D or 3D antenna array 16 configured to transmit the RF signals to the JCAS device. For instance, the antenna array can be a 2D array of antenna elements which can be placed in front of the JCAS device 20.

Furthermore, the MNCE 11 can comprise an optional fading module 14. The fading module 14 can be configured to emulate a fading in the at least one RF signal which is transmitted to the JCAS capable device 20. In this way, a base band fading can be emulated in the signal. The fading module 14 can be an integrated fading module.

Having an integrated fading module 14 in the MNCE 11 provides the advantage that the RF signal which is transmitted towards the DUT 20 can be generated with known and well-defined characteristics (e.g., a certain baseband fading), prior to its transmission. Thus, all parameters of a scattering can be preprocessed and can be included in the signal (e.g., analogous to a cluster delay line).

For example, the generated signal can be an FR2 signal with embedded radar beacon (e.g., downlink only). The signal can be configured to emulate a certain fading and scattering (e.g., via adaption of its attenuation and/or signal-to-noise ratio, delay, or Doppler shift). Furthermore, the signal can be adapted to simulate multiple scattering targets.

However, the generated signal could also be an LTE or FR1 anchor signal which is uncalibrated and exhibits ideal signal conditions.

The MNCE 11 can be configured to further adapt the at least one RF signal to emulate an object, in particular a dynamic object. Thus, the system 10 can provide a combined base band fading and object emulation. For instance, the MNCE 11 can emulate a movement of the object which emits the RF signal.

Further optionally, the system 10 can comprises a radar signal and/or radar reflection generator 15 which is configured to generate the at least one RF signal in the form of a radar signal. In this way, a radar sensing of the JCAS device 20 can be tested.

For instance, the radar signal / reflection generator 15 can generate the radar signal based on a previously received radar signal from the JCAS capable device 20. In this way, a radar response can be simulated. The radar signal is e.g. configured as a radar pulse. The radar signal and/or radar reflection generator 15 can be a component of the MNCE 11 as indicated in Fig. 3.

For example, the radar signal and/or radar reflection generator 15 can comprise an advanced antenna array, such as R&S^{®}QAT100 or a comparable device, for generating radar signals from moving targets without requiring a physical movement.

According to a further example, the system 10 is an automotive radio echo generator (AREG) for 2D target simulation. In this example, the system 10 can comprise a 2D antenna array to simulate multiple targets, e.g. in one direction of the DUT 20 (e.g., a base station). Furthermore, the system 10 can also be configured to simulate multiple moving targets.

In the exemplary embodiment shown in Fig. 4, the system 10 comprise an anechoic chamber 41 designed for accommodating the JCAS capable device 20. For instance, the JCAS device 20 can be arranged in a defined position in the chamber 41. Thereby, the MNCE 11 or a signal emitting component of the MNCE can be arranged in the anechoic chamber 41 relative to the JCAS device 20.

The system 10 as shown in any one of Figs. 1, 3 and 4 can combine an emulation of JCAS network components with a target simulation and/or a simulation of baseband fading. This allows for a high flexibility in test scenarios and high precision in signal generation. Having intrinsic knowledge about the signal generated and transmitted by the MNCE 11, further allows for an accurate verification of the JCAS device 20 capabilities. By performing the target simulation directly with the MNCE 11, a latency can be reduced and indoor scenarios (e.g., short signal runtimes) can be simulated. This leads to strong cost reductions compared to a solution with external faders.

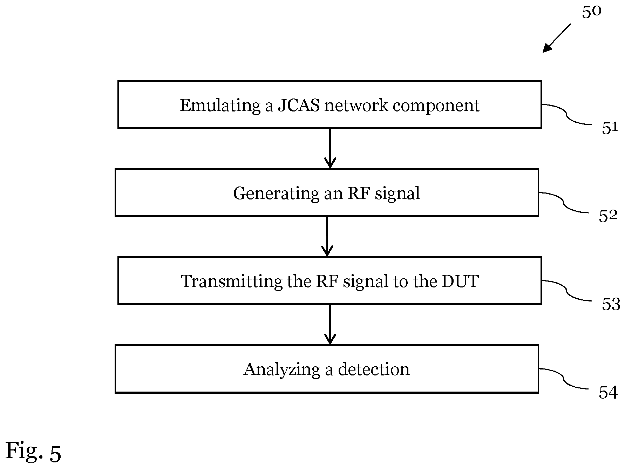

Fig. 5 shows a flow diagram of a method 50 for testing the JCAS capable device 20 according to an embodiment.

The method 50 comprises: emulating 51 at least one JCAS network component; generating 52 the at least one RF signal with defined signal characteristics according to the emulated JCAS network component; transmitting 53 said RF signal to the JCAS capable device 20; and analyzing 54 the detection of at least one of the following parameters by the JCAS capable device based on the at least one RF signal: a CIR, a signal runtime, a signal level, a signal DOA, a Doppler shift, and a Micro-Doppler shift.

The JCAS network component can be emulated with the MNCE 11. The MNCE 11 can generate the at least one RF signal according to the emulated JCAS network component and/or according to a specific communication and sensing scenario.

For example, the method 50 can be used with the system 10 as e.g. shown in any one of Figs. 1, 3 or 4.

While various embodiments of the present disclosure have been described above, it should be understood that they have been presented by way of example only, and not limitation. Numerous changes to the disclosed embodiments can be made in accordance with the disclosure herein, without departing from the spirit or scope of the disclosure. Thus, the breadth and scope of the present disclosure should not be limited by any of the above described embodiments. Rather, the scope of the disclosure should be defined in accordance with the following claims and their equivalents.

Although the disclosed embodiments have been illustrated and described with respect to one or more implementations, equivalent alterations and modifications will occur or be known to others skilled in the art upon the reading and understanding of this specification and the annexed drawings. In addition, while a particular feature of the present disclosure may have been disclosed with respect to only one of several implementations, such feature may be combined with one or more other features of the other implementations as may be desired and advantageous for any given or particular application.

## Claims

1. A system (10) for testing a joint communication and sensing, JCAS, capable device (20), comprising:
a mobile network component emulator (11) , MNCE, which is configured to emulate at least one JCAS network component;
wherein the MNCE (11) is configured to generate at least one RF signal with defined signal characteristics and to transmit said RF signal to the JCAS capable device; and
a processor (12) which is configured to analyze a detection of at least one of the following parameters by the JCAS capable device (20) based on the at least one RF signal:
- a channel impulse response, CIR,
- a signal runtime,
- a signal level,
- a signal direction of arrival, DOA,
- a Doppler shift, and
- a Micro-Doppler shift.

2. The system of claim 1,
wherein the emulated JCAS network component (11) comprises an emulated base station.

3. The system of claim 1 or 2,
wherein the emulated JCAS network component (11) comprises an emulated user equipment.

4. The system of any of the preceding claims,
wherein the processor (12) is configured to determine an accuracy of the detection of the at least one parameter by the JCAS capable device (20).

5. The system of any of the preceding claims,
wherein the processor (11) is configured to analyze a detection of two, more or all of the parameters by the JCAS capable device (20).

6. The system of any of the preceding claims,
wherein the MNCE (11) comprises a fading module configured to emulate a fading in the at least one RF signal.

7. The system of any of the preceding claims,
wherein the MNCE (11) is configured to further adapt the at least one RF signal to emulate a scattering and/or a reflection from an object.

8. The system of any of the preceding claims, further comprising:
a radar signal and/or radar reflection generator which is configured to generate the at least one RF signal in the form of a radar signal.

9. The system of any of the preceding claims,
wherein the MNCE (11) comprises a 2D or 3D antenna array configured to transmit the RF signals to the JCAS device (20).

10. The system of any of the preceding claims, further comprising:
an anechoic chamber designed for inserting the JCAS capable device (20).

11. The system of any of the preceding claims,
wherein the system (10) is configured to issue a sensing request message to the JCAS capable device (20) prior to transmitting the at least one RF signal.

12. The system of claim 11,
wherein the sensing request message comprises information regarding a direction of radiation and/or a signal strength of the at least one RF signal.

13. A method for testing a joint communication and sensing, JCAS, capable device (20), comprising:
Emulating (11) at least one JCAS network component (20);
generating at least one RF signal with defined signal characteristics according to the emulated JCAS network component;
transmitting said RF signal to the JCAS capable device; and
analyzing a detection of at least one of the following parameters by the JCAS capable device based on the at least one RF signal:
- a channel impulse response, CIR,
- a signal runtime,
- a signal level,
- a signal direction of arrival, DOA,
- a Doppler shift, and
- a Micro-Doppler shift.
